# EUROPÄISCHE PATENTSCHRIFT

(11) **EP 3 456 495 B1**
(45) Veröffentlichungstag und Bekanntmachung des Hinweises auf die Patenterteilung: **30.06.2021**
(21) Anmeldenummer: 17400054.7
(22) Anmeldetag: 15.09.2017
(51) Int. Cl.: B27B 17/00

(54) **HANDGEFÜHRTES ARBEITSGERÄT**
MANUALLY OPERATED WORK DEVICE
APPAREIL DE TRAVAIL PORTATIF

(43) Veröffentlichungstag der Anmeldung: 20.03.2019
(73) Patentinhaber: Andreas Stihl AG & Co. KG, 71336 Waiblingen (DE)
(72) Erfinder: Wolf, Günter, 71570 Oppenweiler (DE); Kapinsky, Ulrich, 71334 Waiblingen (DE); Maier, Matthias, 71334 Waiblingen (DE); Köhli, Robert, 71364 Winnenden (DE)
(74) Vertreter: Zurhorst, Stefan

(56) Entgegenhaltungen:
- EP-A2- 3 181 856
- DE-A1- 3 916 414
- DE-A1- 4 037 885
- JP-U- H0 326 501
- US-A- 3 881 250

## Beschreibung

Die Erfindung betrifft ein handgeführtes Arbeitsgerät mit den Merkmalen nach dem Oberbegriff des Anspruchs 1.

Ein solches Gerät ist aus EP3181856A2 bekannt.

Aus der DE 39 16 414 A1 und aus der US 3,881,250 A sind handgeführte Arbeitsgeräte mit Verbrennungsmotor und Ansaugluftfilter bekannt, wobei Ansaugluft durch Ansaugluftfenster eines Filtergehäuses angesaugt wird. Diese Ansaugluft durchströmt das jeweilige Filterelement in axialer Richtung.

Bei gattungsgemäßen handgeführten Arbeitsgeräten hingegen weist der Ansaugluftfilter des Verbrennungsmotors ein radial zur Filterachse durchströmtes Filterelement sowie eine geneigte Filterachse auf. Dies führt dazu, dass das um die Filterachse umlaufende Filterelement neben einem unteren Abschnitt und seitlichen Abschnitten auch einen bezogen auf die Hochrichtung oberen Filterabschnitt aufweist. Der Luftfilter ist von einem Filtergehäuse umgeben, welches mindestens ein Ansaugluftfenster aufweist. Dieses mindestens eine Ansaugluftfenster befindet sich abseits des genannten oberen Filterabschnitts, also im Bereich der unteren oder seitlichen Filterabschnitte. Der hierdurch in den Innenraum des Filtergehäuses eintretende Ansaugluftstrom verteilt sich nun über den Umfang des Filterelementes, um möglichst an allen Stellen einen möglichst gleichmäßigen Luftdurchsatz durch das Filtermaterial zu erzielen. Das Material des Filterelementes hält dabei Verunreinigungen der Ansaugluft der unterschiedlichsten Art vom feinen Staub bis hin zu groben Spänen zurück. Feinere Partikel bleiben dabei im oder am Filtermaterial hängen, während grobe Verschmutzungen wie Holzspäne oder dergleichen nach Möglichkeit vom Filterelement abfallen sollen, um den Luftdurchsatz nicht zu behindern.

Im praktischen Betrieb hat sich jedoch gezeigt, dass die genannten groben Verschmutzungspartikel dazu neigen, sich auf dem oberen Filterabschnitt anzusammeln, wo sie dann ohne abzufallen verbleiben. Dies kann bis zu einem völligen Ausfüllen des Zwischenraums zwischen dem oberen Filterabschnitt und dem darüber liegenden Gehäuseabschnitt führen. Die daraus resultierende Verstopfung verhindert eine äußere Umströmung des Filterelementes sowie eine über den Umfang gleichmäßig verteilte Durchströmung des Filtermaterials, was die Filtrierleistung senkt und den Ansaugwiderstand erhöht. Zum Beseitigen einer solchen Verstopfung müssen das Filtergehäuse und ggf. auch der Luftfilter abgenommen werden. Ein solcher aufwändiger Wartungseingriff birgt zudem die Gefahr, dass die dann plötzlich abfallenden Grobverschmutzungen auf die Reinluftseite des Filters und damit in den Ansaugtrakt des Verbrennungsmotors gelangen.

Der Erfindung liegt die Aufgabe zugrunde, ein gattungsgemäßes Arbeitsgerät derart weiterzubilden, dass eine sichere Filtrierung der Ansaugluft bei verringertem Wartungsaufwand möglich ist.

Diese Aufgabe wird durch ein Arbeitsgerät mit den Merkmalen des Anspruchs 1 gelöst.

Die Erfindung basiert zunächst auf der Erkenntnis, dass die Bildung eines Verschmutzungsdepots einerseits dadurch begünstigt ist, dass der obere Filterabschnitt quasi als Ablagefläche dient, und dass andererseits auch bestimmte dort herrschende Strömungsverhältnisse Einfluss nehmen. Aufbauend auf dieser erfindungsgemäßen Erkenntnis ist nun vorgesehen, dass das Filtergehäuse zusätzlich zu dem mindestens einen Ansaugluftfenster noch ein oberes, permanent offenes Kaltluftansaugfenster im Bereich des oberen Filterabschnitts aufweist. Es sind also insgesamt mindestens zwei voneinander getrennte Fenster vorgesehen, die in gegenseitiger Wechselwirkung zusätzlich zur Durchströmung des Filterelementes auch eine gesteuerte Umströmung desselben in einer bestimmten Weise herbeiführen. Außerhalb des Filterelementes entsteht eine anteilige Umströmung in Umfangsrichtung. Die von oben durch das permanent offene Kaltluftansaugfenster eintretende Kaltluft ist relativ sauber mit vergleichsweise geringer Schmutzbelastung. Sie wird am oberen Filterabschnitt seitlich abgelenkt und an den seitlichen Abschnitten des Filterelementes nach unten geführt. Das ohnehin vorhandene mindestens eine Ansaugluftfenster liegt weiter unten. Hierdurch wird Luft mit höherem Verschmutzungsgrad angesaugt. Auch dieser anteilige Ansaugluftstrom erfährt eine Umlenkung, und zwar an den seitlichen Abschnitten des Filterelementes aufwärts. Die mitgeführten Späne und anderen Schmutzpartikel können jedoch nicht auf den oberen Filterabschnitt gelangen, da der aufwärts gerichtete Teilstrom des mindestens einen Ansaugluftfensters auf den abwärts gerichteten Teilstrom des oberen permanent offenen Kaltluftansaugfensters trifft und deshalb in Umfangsrichtung ausgebremst wird. Bezogen auf die Umfangsrichtung kommt es zur Bildung eines "Staupunktes" bzw. einer "Staufront" im Bereich der seitlichen Abschnitte des Filterelementes als Sperre für den Weitertransport von Spänen und Schmutz von unten nach oben. Die außerdem eventuell dennoch auf dem oberen Filterabschnitt vorhandenen bzw. gebildeten Ansammlungen davon werden ihrerseits in Umfangsrichtung ebenfalls zu den seitlichen Filterabschnitten hin fortgeblasen. Jedenfalls können sich die zu den Seitenflächen des Filterelementes geführten Partikel dort kaum ablagern. Falls sich dennoch eine temporäre seitliche Ablagerung bildet, fällt diese im Leerlauf oder bei ausgeschaltetem Motor, spätestens jedoch beim nächsten Abstellen des Arbeitsgerätes auf dem Boden selbsttätig unter Einwirkung der Gewichtskraft ab. Die Bildung eines Depots von Spänen oder anderen groben Verschmutzungspartikeln entlang des Filterumfangs und insbesondere auf dem oberen Filterabschnitt ist zuverlässig vermieden. Das Filterelement bleibt infolge dessen entlang seines gesamten Umfangs frei von Ablagerungen und Verstopfungen. Die in das Filtergehäuse eintretende Frischluft kann sich frei verteilen und entlang des gesamten Umfangs durch das Filterelement hindurch angesaugt werden.

Die Ausbildung des zusätzlichen, oberen Ansaugfensters als permanent offenes Kaltluftansaugfenster sorgt einerseits dafür, dass die vorstehend beschriebene Wirkung dauerhaft und zuverlässig vorhanden ist, ohne dass der Benutzer aktiv und steuernd eingreifen muss. Ohne dass die Luft vom Verbrennungsmotor vorgewärmt wird, bleibt die Gesamtmenge des Ansaugluftstroms andererseits kalt, was der Leistungsentwicklung zugutekommt.

Die Luftfilteranordnung weist in einer senkrecht zur Filterachse liegenden Bezugsebene eine durch die Hochrichtung vorgegebene Hochachse auf. In vorteilhafter Weiterbildung der Erfindung liegt das obere permanent offene Kaltluftansaugfenster auf dieser Hochachse und ist insbesondere symmetrisch dazu ausgebildet. Es kann zweckmäßig sein, abseits des oberen Filterabschnitts nur ein einzelnes Ansaugluftfenster vorzusehen. Bevorzugt weist jedoch das Filtergehäuse auf den beiden sich gegenüberliegenden Seiten der Hochachse je ein seitliches Ansaugluftfenster auf. Hierdurch wird innerhalb des Luftfiltergehäuses eine Strömungsführung um das Filterelement herum erzeugt, die von dem oberen Filterabschnitt in beide seitliche Richtungen fortweist und dort vorhandene Schmutzpartikel in beide Seitenrichtungen fortträgt, während die beiden seitlichen Ansaugluftfenster sicherstellen, dass sich auch in den Seitenbereichen keine Ablageund Verstopfungsmöglichkeiten bilden.

Die Luftfilteranordnung weist in der senkrecht zur Filterachse liegenden Bezugsebene eine senkrecht zur Hochachse liegende Querachse auf. In vorteilhafter Weiterbildung der Erfindung liegt das mindestens eine seitliche Ansaugluftfenster unterhalb dieser Querachse. In Verbindung mit der Positionierung des permanent offenen Kaltluftansaugfensters im Bereich des oberen Filterabschnitts ergibt sich zwischen beiden Fenstern ein großer vertikaler Abstand, der zu ausgeprägten Geschwindigkeitskomponenten der Luftströmung in Umfangsrichtung des Filterelementes führt. Dies trägt zu einer Vergleichmäßigung der Luftverteilung um das Filterelement herum bei und vermeidet zudem die Bildung von Ablagerungen auch in den Bereich zwischen den Fenstern.

In einer bevorzugten Ausführungsform erstreckt sich das obere permanent offene Kaltluftansaugfenster in der Bezugsebene über einen ersten Umfangswinkel, wobei dieser erste Umfangswinkel ≤ 90° und bevorzugt ≤ 70° ist und insbesondere zumindest näherungsweise 50° beträgt. Zweckmäßig weist das Filtergehäuse eine Umfangswand auf, wobei die Umfangswand zwischen dem oberen permanent offenen Kaltluftansaugfenster und dem benachbarten seitlichen Ansaugluftfenster einen seitlichen strömungsdichten Wandabschnitt aufweist, der sich in der Bezugsebene über einen zweiten Umfangswinkel erstreckt, wobei der zweite Umfangswinkel > 60° und insbesondere > 80° ist. Vorteilhaft weist das obere permanent offene Kaltluftansaugfenster bezogen auf seine Erstreckung in der Umfangsrichtung einen Mittelpunkt auf, wobei der Mittelpunkt des oberen permanent offenen Kaltluftansaugfensters in der Bezugsebene in einem dritten Umfangswinkel relativ zur angrenzenden Kante des benachbarten Ansaugluftfensters positioniert ist, und wobei der dritte Umfangswinkel in einem Bereich von einschließlich 100° bis einschließlich 130° liegt und insbesondere zumindest näherungsweise 120° beträgt. Durch die genannten Winkelangaben stehen die Umfangsanteile der Öffnungen und der strömungsdichten Wandabschnitte in einem solchen Verhältnis zueinander, dass einerseits eine ausreichende Frischluftzufuhr und andererseits eine Zwangsführung der Strömung auch in Umfangsrichtung um das Filterelement herum in ausreichendem Maße sichergestellt ist.

Der von der Hochrichtung abgetragene Neigungswinkel der Filterachse ist vorteilhaft > 30° und insbesondere > 45°. Zweckmäßig ist der genannte Neigungswinkel ≤ 100° und insbesondere ≤ 90°. Hierdurch ist ein oberer Filterabschnitt in einem solchen Maß ausgeprägt, dass die erfindungsgemäße Strömungsführung mit ihrer oben beschriebenen Wirkung zur Vermeidung von Ablagerungen voll zum Tragen kommt.

Es kann zweckmäßig sein, das obere permanent offene Kaltluftansaugfenster angrenzend zu einer Stirnseite des Luftfilters, also angrenzend zum Filterboden oder zur Stirnwand des Filterdeckels anzuordnen. Bevorzugt ist das obere permanent offene Kaltluftansaugfenster jedoch in der Umfangswand des Filtergehäuses ausgebildet und auf die Oberseite des Filterumfanges gerichtet. Besonders zweckmäßig ist das Kaltluftansaugfenster in der Umfangswand des Filtergehäuses und benachbart bzw. angrenzend zum Filterboden ausgebildet. Hierdurch wird der kritische obere Filterabschnitt, insbesondere die für eine Schmutzansammlung begünstigte Ecke zwischen Filterelement und Filterboden, unmittelbar mit Ansaugluft bei entsprechend großer Strömungsgeschwindigkeit beaufschlagt.

In vorteilhafter Weiterbildung der Erfindung weist die Luftfilteranordnung als eigenständigen erfinderischen Gedanke ein Bodenbauteil auf, welches einen Filterboden des Filtergehäuses bildet und außerdem zumindest abschnittsweise über die Kontur des Filtergehäuses derart hinausgezogen ist, dass es ein Wandteil eines in das Filtergehäuse führenden Frischluftkanals bildet. Hierdurch ist eine besonders strömungsdichte Führung der Ansaugluft möglich, wobei zuverlässig eine Abschirmung gegen leistungsmindernde, vom Verbrennungsmotor ausgehende Warmluft gelingt.

Bevorzugt weist der Verbrennungsmotor eine Kühlluftführung mit einer Abtrennung gegenüber der Ansaugluftführung der Luftfilteranordnung auf. Zweckmäßig ist der Verbrennungsmotor ein Einspritzmotor ohne Ansaugluftvorwärmung. Die zum Einsatz kommende frische Ansaugluft ist also ausschließlich Kaltluft, welche nicht nur temporär zur Verfügung steht, und welche neben der eingangs beschriebenen dauerhaften Reinhaltung des Filters auch infolge der hohen Luftdichte zu einer hohen Leistungsentfaltung des Verbrennungsmotors beiträgt.

Ein Ausführungsbeispiel der Erfindung ist nachfolgend anhand der Zeichnung näher beschrieben. Es zeigen:
- Fig. 1: in einer perspektivischen Ansicht ein erfindungsgemäß ausgeführtes Arbeitsgerät am Beispiel einer Kettensäge,
- Fig. 2: das Arbeitsgerät nach Fig. 1 mit abgenommenem Luftfilterdeckel und mit Einzelheiten zur Ausgestaltung des Ansaugluftfilters,
- Fig. 3: in einer Längsschnittdarstellung das Arbeitsgerät nach Fig. 1 im Bereich seines Luftfilters mit Einzelheiten zur geometrischen Ausgestaltung der Luftfilteranordnung,
- Fig. 4: in einer perspektivischen Ansicht den Luftfilterdeckel nach den Fig. 1 und 3 mit Einzelheiten zur Ausgestaltung eines oberen permanent offenen Kaltluftansaugfensters in einer inneren Umfangswand,
- Fig. 5: in einer perspektivischen Ansicht das Bodenbauteil der Luftfilteranordnung nach den Fig. 1 bis 4 mit Einzelheiten zu angeformten Wandteilen zur Bildung von Frischluftkanälen,
- Fig. 6: das Arbeitsgerät nach den vorstehenden Figuren in einem Querschnitt durch dessen Luftfilteranordnung mit Einzelheiten zur Positionierung und Erstreckung der verschiedenen Luftfenster.

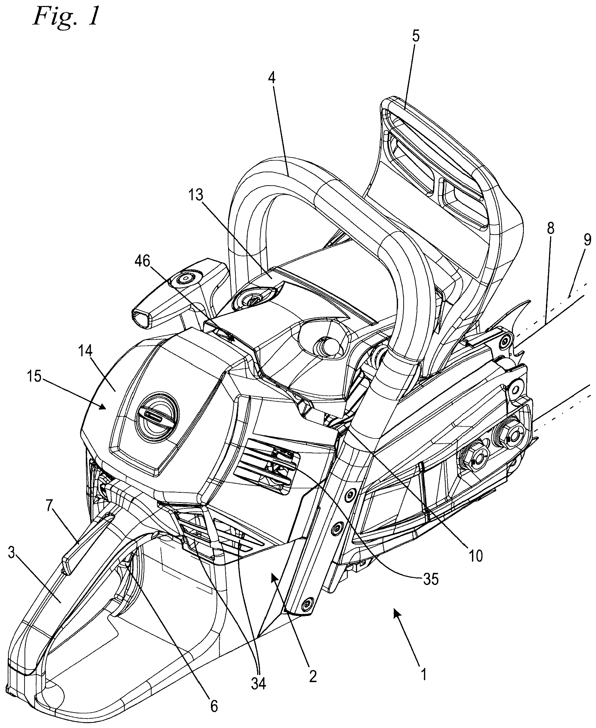

Fig. 1 zeigt in einer perspektivischen Ansicht ein handgeführtes Arbeitsgerät 1. Das Arbeitsgerät 1 ist im Ausführungsbeispiel eine tragbare, handgeführte Motorsäge. Das handgeführte Arbeitsgerät 1 kann jedoch auch ein anderes Arbeitsgerät, beispielsweise ein Freischneider, Trennschleifer, Blasgerät oder dergleichen sein. Das Arbeitsgerät 1 weist ein Gehäuse 2 auf, in dem ein Verbrennungsmotor 10 angeordnet ist. Der Verbrennungsmotor 10, welcher in Fig. 1 nur teilweise zwischen den Gehäuseteilen des Gehäuses 2 erkennbar ist, dient zum Antrieb eines Werkzeugs des Arbeitsgeräts 1. Das Werkzeug ist im Ausführungsbeispiel eine schematisch angedeutete Sägekette 9, die um eine Führungsschiene 8 umläuft.

Zum Führen des Arbeitsgeräts 1 sind ein hinterer Handgriff 3 sowie ein Griffrohr 4 vorgesehen. An der der Sägekette 9 zugewandten Seite des Griffrohrs 4 ist ein Handschutz 5 angeordnet, der am Gehäuse 2 fixiert ist. Der Handschutz 5 dient in bevorzugter Gestaltung dem Betätigen einer Bremsvorrichtung für die Sägekette 9. Am hinteren Handgriff 3 sind ein Gashebel 6 sowie eine Gashebelsperre 7 schwenkbar gelagert. Der Gashebel 6 dient der Ansteuerung des Verbrennungsmotors 10. Das Gehäuse 2 umfasst einen Deckel 13, welcher einen Teil der Außenhülle des Arbeitsgeräts 1 bildet. Der Deckel 13 deckt den Verbrennungsmotor 10 des Arbeitsgeräts 1 mindestens teilweise ab. Im Ausführungsbeispiel bildet der Deckel 13 einen Teil des Gehäuses 2. Das Gehäuse 2 ist dabei aus mehreren Komponenten zusammengesetzt, die auch andere Funktionen besitzen können. Das Gehäuse 2 ist insbesondere kein geschlossenes Gehäuse. Das Gehäuse 2 umfasst außerdem einen im Ausführungsbeispiel separat vom Deckel 13 ausgebildeten, abnehmbaren Luftfilterdeckel 14, wobei zwischen dem Deckel 13 und dem Luftfilterdeckel 14 ein Spalt 46 ausgebildet ist. Der lösbar fixierte Luftfilterdeckel 14 ist Teil einer erfindungsgemäßen, weiter unten näher beschriebenen Luftfilteranordnung 15. Im feststehenden Teil des Gehäuses 2 unterhalb des Luftfilterdeckels 14 sowie auch im Luftfilterdeckel 14 selbst sind Ansauggitter 34, 35 ausgebildet, durch die im Betrieb Frischluft aus der Umgebung angesaugt und durch die Luftfilteranordnung 15 hindurch als Verbrennungsluft dem Verbrennungsmotor 10 zugeführt wird.

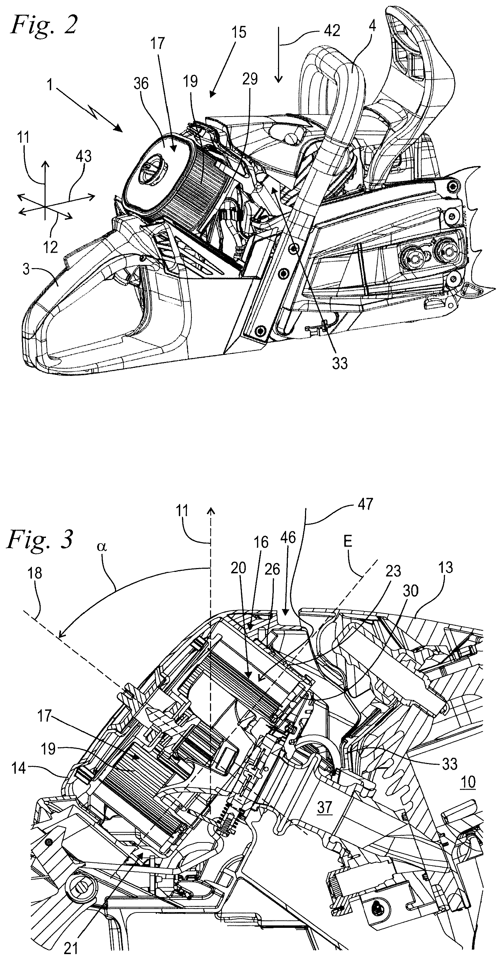

Fig. 2 zeigt in einer perspektivischen Ansicht das Arbeitsgerät 1 nach Fig. 1 in seiner Abstellposition, wenn es also auf einer senkrecht zur Gewichtskraftrichtung 42, also horizontal liegenden Fläche abgestellt ist. Diese Abstellposition entspricht im Übrigen auch einer gewöhnlichen Arbeitsposition, in der das Arbeitsgerät 1 am hinteren Handgriff 3 und am Griffrohr 4 gehalten und geführt wird, und in der die Unterseite des Arbeitsgerätes 1 dem Boden zugewandt ist. Das Arbeitsgerät 1 weist eine Hochrichtung 11 auf, die in der gezeigten Abstellposition bzw. Arbeitsposition parallel zur Gewichtskraftrichtung 42 liegt. Außerdem erstreckt sich das Arbeitsgerät 1 ausgehend vom hinteren Handgriff 3 zum gegenüberliegenden vorderen Ende der Führungsschiene 8 (Fig. 1) in einer Längsrichtung 43, welche senkrecht zur Hochrichtung 11 liegt. Senkrecht zur Hochrichtung 11 und auch senkrecht zur Längsrichtung 43 des Arbeitsgeräts 1 verläuft eine Seitenrichtung 12.

Im Unterschied zur Darstellung nach Fig. 1 ist das Arbeitsgerät 1 in Fig. 2 mit abgenommenem Luftfilterdeckel 14 gezeigt. Demnach ist zu erkennen, dass die Luftfilteranordnung 15 neben dem genannten, hier nicht dargestellten Luftfilterdeckel 14 auch ein Bodenbauteil 29 umfasst, auf welches ein Luftfilter 17 mit einer undurchlässigen Stirnwand 36 und mit einem luftdurchlässigen, umlaufenden Filterelement 19 aufgesetzt bzw. aufgesteckt ist.

Fig. 3 zeigt das Arbeitsgerät 1 nach den Fig. 1 und 2 mit aufgesetztem Luftfilterdeckel 14 und mit weiteren Einzelheiten der in Fig. 2 dargestellten Luftfilteranordnung 15. Außerdem ist ein Teil des Verbrennungsmotors 10 erkennbar, welcher mittels eines Ansaugkanals 37 frische Verbrennungsluft durch die Luftfilteranordnung 15 hindurch und deshalb im gefilterten Zustand ansaugt. Darüber hinaus gibt es eine Kühlluftführung um den Zylinder des Verbrennungsmotors 10, welche mittels einer Abtrennung 33 gegenüber der nachfolgend noch näher beschriebenen Ansaugluftführung der Luftfilteranordnung 15 abgetrennt ist. Im gezeigten Ausführungsbeispiel ist der Verbrennungsmotor 10 ein Einspritzmotor ohne Ansaugluftvorwärmung. All dies führt dazu, dass es sich bei der durch die Luftfilteranordnung 15 angesaugten Verbrennungsluft um Kaltluft aus der Umgebung ohne technisch relevanten Wärmeeinfluss des im Betrieb heißen Verbrennungsmotors 10 handelt. Im Rahmen der Erfindung kann der Verbrennungsmotor 10 aber auch als Vergasermotor mit und ohne bedarfsabhängig zuschaltbarer Vergaservorwärmung ausgeführt sein.

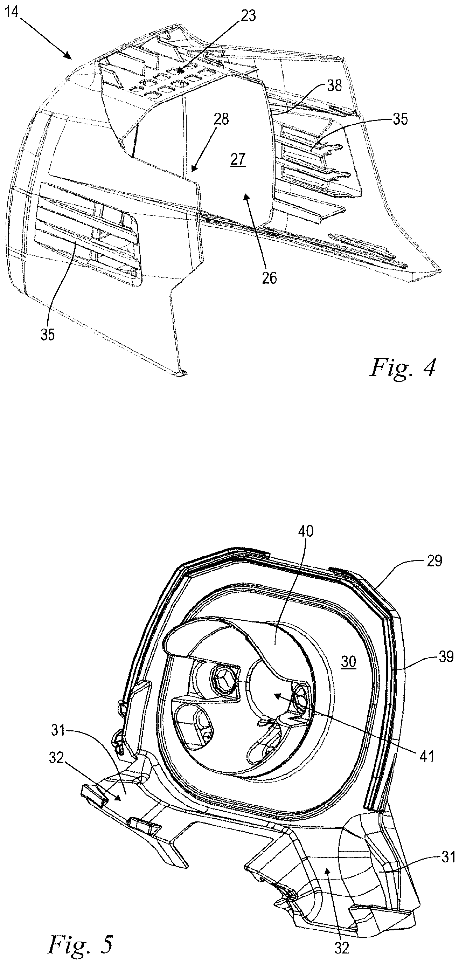

Aus der Zusammenschau der Fig. 2 und 3 ergibt sich, dass sich der Luftfilter 17 entlang einer Filterachse 18 erstreckt, wobei das Filterelement 19 ringsum die Filterachse 18 herum umläuft. Die innerhalb des Filterelementes 19 liegende Reinluftseite des Luftfilters 17 ist auf der dem Verbrennungsmotor 10 abgewandten Seite durch die in Fig. 2 dargestellte Stirnwand 36 und auf der dem Verbrennungsmotor 10 zugewandten Stirnseite durch einen Filterboden 30 abgedeckt. Das Filterelement 19 ist vorteilhaft an beiden axialen Enden insbesondere formstabil eingefasst, so dass zwischen dem Filterboden 30 und der Einfassung des Filterelements eine umlaufende Dichtung ausgebildet ist. Der Filterboden 30 ist Teil des in den Fig. 2 und 5 dargestellten Bodenbauteils 29. Das Filterelement 19 ist radial zur Filterachse 18 luftdurchlässig und besteht zu diesem Zweck aus faltenförmig angeordnetem Filtermaterial. Es können aber auch Ausführungen ohne Falten oder Ausführungen mit mehreren Filterlagen zweckmäßig sein. Das Filtermaterial enthält insbesondere polymere Bestandteile und ist als Filtervlies (Filterpapier) oder Filtermatte ausgebildet. Es können aber auch andere Filtermaterialien eingesetzt werden. Jedenfalls ist im Rahmen der Erfindung angestrebt, dass das umlaufende Filterelement 19 über seinen gesamten Umfang verteilt mit frischer Ansaugluft beaufschlagt und dann radial zur Filterachse 18 durchströmt wird. Hierzu ist neben der oben schon erwähnten Stirnwand 36 ein Filtergehäuse 16 vorgesehen, welches den Luftfilter 17 umgibt. Das Filtergehäuse 16 ist unter anderem durch den vorstehend schon erwähnten Filterboden 30 sowie durch eine im Luftfilterdeckel 14 ausgeformte und um das Filterelement 19 teilweise umlaufende Umfangswand 26 gebildet.

Weiter ist in Fig. 3 erkennbar, dass die Filterachse 18 in einem Neigungswinkel α zur Hochrichtung 11 liegt. Ausgehend von der Hochrichtung 11 gemessen bzw. hiervon abgetragen ist der Neigungswinkel α der Filterachse 18 bevorzugt > 30° und insbesondere > 45°, und beträgt im gezeigten Ausführungsbeispiel etwa 50°. Vorteilhaft ist der Neigungswinkel α jedoch nicht größer als 100° und insbesondere ≤ 90°. Infolge der genannten Neigung der Filterachse 18 bildet das Filterelement 19 bezogen auf die Hochrichtung 11 einen oberen Filterabschnitt 20 aus.

Abseits des genannten oberen Filterabschnitts 20 ist das Filtergehäuse 16 mit mindestens einem weiter unten näher beschriebenen Ansaugluftfenster 21 versehen, wobei sich aus den übrigen Darstellungen noch ergeben wird, dass beim gezeigten Ausführungsbeispiel tatsächlich zwei solcher Ansaugluftfenster 21, 22 abseits des oberen Filterabschnitts 20 vorhanden sind. Zusätzlich dazu ist das Filtergehäuse 16 noch mit einem oberen, permanent offenen Kaltluftansaugfenster 23 versehen, welches in radialer Richtung unmittelbar gegenüberliegend zur Außenseite des oberen Filterabschnitts 20, jedenfalls aber im Wirkungsbereich des oberen Filterabschnitts 20 positioniert ist. Im Betrieb wird ein Kaltluftstrom 47 als anteiliger Verbrennungsluftstrom durch den Spalt 46 zwischen dem Deckel 13 und dem Luftfilterdeckel 14 hindurch und von dort durch das Kaltluftansaugfenster 23 in die Innenseite des Filtergehäuses 16 angesaugt. Vorteilhaft ist das permanent offene Kaltluftansaugfenster 23 nicht nur nahe zum oberen Filterabschnitt 20, sondern auch in Richtung der Filterachse 18 nahe zum Filterboden 30 positioniert. In der Längsschnittdarstellung nach Fig. 3 bilden nämlich dort der Filterboden 30 und der obere Filterabschnitt eine tiefliegende Ecke, welche ihrerseits einen tiefsten Punkt bzw. eine tiefste Kante der äußeren Filteroberseite darstellt. Dieser Bereich ist für Schmutzansammlung besonders anfällig, da Schmutz aufgrund von betriebsbedingten Vibrationen automatisch hierhin rutscht und sich anstaut. Die Positionierung des oberen, permanent offenen Kaltluftansaugfensters 23 an dieser Stelle sorgt jedoch dafür, dass der genannte Eckbereich insbesondere mittels des Kaltluftstroms 47 ausgeblasen und dadurch zuverlässig freigehalten wird.

Fig. 4 zeigt in einer perspektivischen Ansicht den Luftfilterdeckel 14 nach den Fig. 1 und 3. Hier ist zu erkennen, dass auf der Innenseite des Luftfilterdeckels 14 die oben schon erwähnte Umfangswand 26 des Filtergehäuses 16 (Fig. 3) einteilig ausgeformt ist. Im oberen, in dieser Ansicht etwa horizontal liegenden Abschnitt der Umfangswand 26 ist das permanent offene Kaltluftansaugfenster 23 ausgebildet. Hierbei kann es sich um eine einzelne Öffnung handeln. Im gezeigten Ausführungsbeispiel ist das permanent offene Kaltluftansaugfenster 23 durch eine Gitterstruktur in mehrere Teilöffnungen aufgeteilt. Hieran schließen sich beidseitig seitliche, strömungsdichte Wandabschnitte 27, 28 an. Abseits der Umfangswand 26, nämlich in Längsrichtung des Arbeitsgerätes 1 vor der Umfangswand 26 ist der Luftfilterdeckel 14 noch mit den im Zusammenhang mit Fig. 1 bereits erwähnten Ansauggittern 35 auf beiden Seitenflächen versehen.

Fig. 5 zeigt in einer perspektivischen Ansicht das im Zusammenhang mit den Fig. 2 und 3 bereits erwähnte Bodenbauteil 29. Ein zentraler Teil des Bodenbauteils 29 bildet den Filterboden 30 des Filtergehäuses 16 nach Fig. 3 Hierzu ist der Filterboden 30 mit einem mittigen Kragen 40 versehen, auf den der Luftfilter 17 (Fig. 2, 3) aufgesteckt wird. Ein innerhalb des Kragens 40 liegender Auslass 41 mündet in den Ansaugkanal 37 (Fig. 3), so dass hierdurch gefilterte Ansaugluft aus der inneren Reinseite des Luftfilters 17 dem Verbrennungsmotor 10 zugeführt wird.

Aus der Darstellung nach Fig. 5 ergibt sich noch, dass der Filterboden 30 im Bereich seines äußeren Randes mit einer elastischen Dichtnut 39 versehen ist. Diese entspricht in Verlauf und Erstreckung einer in Fig. 4 dargestellten Stirnkante 38 der Umfangswand 26. Im montierten Zustand, wie er insbesondere in Fig. 3 erkennbar ist, greift die Umfangswand 26 mit ihrer Stirnkante 38 (Fig. 4) in die Dichtnut 39 dichtend ein. Mit Ausnahme der Ansaugluftfenster 21, 22 und des oberen permanent offenen Kaltluftansaugfensters 23 (Fig. 3, 4, 6) ist daher der Luftfilter 17 außenseitig dicht umschlossen, während er auf seiner inneren Reinseite ausschließlich über den Auslass 41 mit dem Verbrennungsmotor 10 (Fig. 3) verbunden ist.

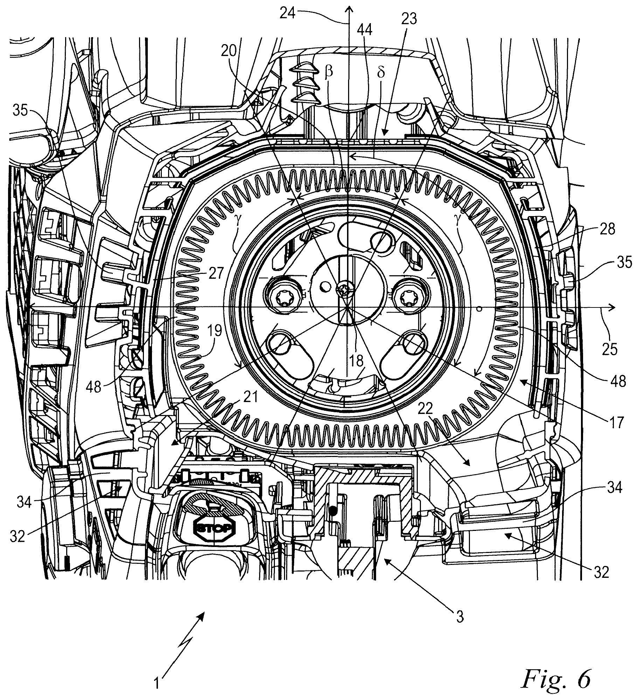

Gemäß einem eigenständigen erfindungsgemäßen Gedanken, der hier nur bevorzugt in Verbindung mit dem ebenfalls erfindungsgemäßen oberen permanent offenen Kaltluftansaugfenster 23 zur Anwendung kommt, aber auch ohne dieses eine eigenständige Erfindung darstellt und eingesetzt werden kann, bildet das Bodenbauteil 29 nicht nur den Filterboden 30 des Filtergehäuses 16, sondern ist außerdem zumindest abschnittsweise über die Kontur des Filtergehäuses 16 (Fig. 3) derart in radialer Richtung hinausgezogen, dass es mindestens einen Wandteil 31 eines in das Filtergehäuse 16 führenden Frischluftkanals 32 bildet. Aus der Zusammenschau mit Fig. 6 ergibt sich, dass am Bodenbauteil 29 insgesamt zwei solcher Wandteile 31 zur Bildung zweier Frischluftkanäle 32 einteilig ausgeformt und bis zur Außenkontur des Arbeitsgerätes 1 geführt sind, wobei jeder Frischluftkanal 32 zu je einem der beiden Ansaugluftfenster 21, 22 führt.

Fig. 6 zeigt das Arbeitsgerät 1 gemäß den Fig. 1 bis 5 in einem Querschnitt durch den Bereich des Luftfilters 17. Zunächst wird jedoch auf die Längsschnittdarstellung nach Fig. 3 verwiesen, demnach die Luftfilteranordnung 15 eine Bezugsebene E aufweist, die senkrecht zur Filterachse 18 liegt. Der Querschnitt nach Fig. 6 ist so gewählt, dass eine Draufsicht etwa senkrecht auf die genannte Bezugsebene E dargestellt ist. Aus der Zusammenschau der Fig. 2, 3 und 6 ergibt sich, dass die Hochrichtung 11 und die Seitenrichtung 12 in horizontaler Richtung, also in Längsrichtung des Arbeitsgerätes 1 auf die Bezugsebene E projiziert werden können. Hierdurch sind auf der Bezugsebene E gemäß der Darstellung nach Fig. 6 eine Hochachse 24 und senkrecht dazu liegend eine Querachse 25 vorgegeben. Die Hochachse 24 und die Querachse 25 liegen nicht nur senkrecht zueinander, sondern auch senkrecht zur Filterachse 18. In Blickrichtung senkrecht auf die Bezugsebene E liegt das obere, permanent offene Kaltluftansaugfenster 23 auf der Hochachse 24, schließt diese also ein. Dabei kann die Mitte des Kaltluftansaugfensters 23 in Richtung der Querachse 25 seitlich zur Hochachse 24 versetzt sein, insbesondere wenn die seitlichen Ansaugluftfenster 21, 22 asymmetrisch ausgebildet sind.

Im gezeigten bevorzugten Ausführungsbeispiel ist das obere, permanent offene Kaltluftansaugfenster 23 spiegelsymmetrisch zur Hochachse 24 ausgebildet. Demnach liegt also dessen Mitte in Richtung der Querachse 25 auf der Hochachse 24. Das obere permanent offene Kaltluftansaugfenster 23 erstreckt sich in der Bezugsebene E um die Filterachse 18 herum über einen ersten Umfangswinkel β, wobei der erste Umfangswinkel β bevorzugt ≤ 90° und insbesondere ≤ 70° ist, und im gezeigten Ausführungsbeispiel etwa 50° beträgt. Eine weitere geometrische Besonderheit betrifft die Positionierung der Fenster: Das obere permanent offene Kaltluftansaugfenster 23 weist in der Draufsicht auf die Bezugsebene E und bezogen auf ihre Erstreckung in der Umfangsrichtung um die Filterachse 18 herum einen Mittelpunkt 44 auf. Der Mittelpunkt 44 des oberen permanent offenen Kaltluftansaugfensters 23 ist in der Bezugsebene E liegend bzw. in der Draufsicht auf die Bezugsebene E in einem dritten Umfangswinkel δ relativ zur angrenzenden Kante des benachbarten Ansaugluftfensters 22 positioniert, wobei der dritte Umfangswinkel δ vorteilhaft in einem Bereich von einschließlich 100° bis einschließlich 130° liegt und im gezeigten bevorzugten Ausführungsbeispiel zumindest näherungsweise 120° beträgt. Sinngemäß das Gleiche gilt auch für den Winkelabstand zwischen dem Mittelpunkt 44 des oberen permanent offenen Kaltluftansaugfensters 23 und der angrenzenden Kante des zusätzlichen seitlichen Ansaugluftfensters 21.

Aus der Zusammenschau der Fig. 4, 5 und 6 ergibt sich noch, dass sich beidseitig des Kaltluftansaugfensters 23 je ein seitlicher strömungsdichter Wandabschnitt 27, 28 der Umfangswand 26 (Fig. 4) befindet. Beide strömungsdichte Wandabschnitte 27, 28 gehen vom oberen Kaltluftansaugfenster 23 aus und erstrecken sich in Umfangsrichtung jeweils über einen zweiten Umfangswinkel γ bis hin zum jeweils benachbarten Ansaugluftfenster 21, 22. Der zweite Umfangswinkel γ ist vorteilhaft > 80° und insbesondere > 90°, und beträgt im gezeigten Ausführungsbeispiel etwa 95°. Jedenfalls ist erkennbar, dass hier beidseitig der Hochachse 24 und insbesondere auch beidseitig des hinteren Handgriffs 3 je ein Ansaugluftfenster 21, 22 positioniert ist, demnach es sich also um seitliche Ansaugluftfenster 21, 22 handelt. Es kann aber auch ein einzelnes seitliches oder auch mittiges Ansaugluftfenster 21, 22 vorgesehen sein. Außerdem ist erkennbar, dass beide Ansaugluftfenster 21, 22 bezogen auf die Hochachse 24 unterhalb der Querachse 25 liegen, also in Richtung der Hochachse 24 gegenüberliegend zum permanent offenen oberen Kaltluftansaugfenster 23 positioniert sind.

Schließlich ergibt sich aus Fig. 6 noch, dass das Arbeitsgerät 1 in Richtung der Querachse 25 bzw. in der Seitenrichtung 12 (Fig. 2) beidseitig jeweils hintere untere Ansauggitter 34 und auch beidseitig höher liegende Ansauggitter 35 aufweist. Die unteren Ansaugluftfenster 21, 22 werden über diese Ansauggitter 34, 35 aus der Umgebung mit frischer und kalter Verbrennungsluft durch den jeweiligen Frischluftkanal 32 hindurch versorgt. Das obere, permanent offene Kaltluftansaugfenster 23 bezieht seine frische, kalte Ansaugluft aus der Umgebung anteilig durch die oberen Ansauggitter 35 und den oberen, insbesondere in den Fig. 1 und 3 erkennbaren Spalt 46 zwischen dem Luftfilterdeckel 14 und dem Deckel 13. Jedenfalls ergibt sich in der Draufsicht nach Fig. 6 neben der ohnehin angestrebten radialen Durchströmung des Filterelements 19 zumindest partiell auch eine außenseitige Umströmung in Umfangsrichtung, welche die Bildung von Ablagerungen insbesondere auf dem oberen Filterabschnitt 20 verhindert. Der durch das obere permanent offene Kaltluftansaugfenster 23 eintretende, vergleichsweise saubere Kaltluftstrom wird seitlich umgelenkt und in der gezeigten Draufsicht auf die Bezugsebene E nach unten zu Seitenbereichen 48 des Filterelementes 19 geführt. Der durch die Ansaugluftfenster 21, 22 eintretende, vergleichsweise stark schmutzbelastete Teilluftstrom wird ebenfalls seitlich umgelenkt und in der gezeigten Draufsicht auf die Bezugsebene E nach oben zu den Seitenbereichen 48 geführt. Die von oben und unten kommenden Teilluftströme treffen bei den Seitenbereichen 48 des Filterelementes 19 aufeinander und stauen sich gegenseitig in Umfangsrichtung auf. Durch geeignete Abstimmung insbesondere der oben genannten Parameter betreffend die Position und Erstreckung des oberen permanent offenen Kaltluftansaugfensters 23 und auch der Ansaugluftfenster 21, 22 lässt sich die Lage des Staubereichs präzise an den Seitenbereichen 48 des Filterelementes 19 positionieren. Von unten eintretende Späne oder anderer Schmutz können über diesen Staubereich hinaus nicht nach oben zum oberen Filterabschnitt 20 gelangen, sondern werden dort zurückgehalten. Spätestens im Leerlauf oder beim Abstellen des Verbrennungsmotors 10 (Fig. 1) fallen eventuell abgesetzte Partikel von den Seitenbereichen 48 des Filterelementes 19 in Richtung der Hochachse 24 nach unten ab, so dass das Filterelement 19 dauerhaft durchlässig bleibt.

## Patentansprüche

1. Handgeführtes Arbeitsgerät mit einem Verbrennungsmotor (10) zum Antrieb eines Werkzeuges des Arbeitsgerätes (1) und mit einer Luftfilteranordnung (15) zur Filterung der Ansaugluft des Verbrennungsmotors (10), wobei das Arbeitsgerät (1) eine Hochrichtung (11) aufweist, wobei die Luftfilteranordnung (15) einen Luftfilter (17) und ein den Luftfilter (17) umgebendes Filtergehäuse (16) umfasst, wobei sich der Luftfilter (17) entlang einer Filterachse (18) erstreckt und ein um die Filterachse (18) umlaufend angeordnetes, radial zur Filterachse (18) durchströmtes Filterelement (19) aufweist, wobei die Filterachse (18) in einem Neigungswinkel (α) zur Hochrichtung (11) liegt und das Filterelement (19) bezogen auf die Hochrichtung (11) einen oberen Filterabschnitt (20) aufweist, und wobei das Filtergehäuse (16) abseits des oberen Filterabschnittes (20) mindestens ein Ansaugluftfenster (21, 22) aufweist,
**dadurch gekennzeichnet, dass** das Filtergehäuse (16) zusätzlich zu dem mindestens einen Ansaugluftfenster (21, 22) noch ein oberes permanent offenes Kaltluftansaugfenster (23) im Bereich des oberen Filterabschnittes (20) aufweist.

2. Arbeitsgerät nach Anspruch 1,
**dadurch gekennzeichnet, dass** die Luftfilteranordnung (15) in einer senkrecht zur Filterachse (18) liegenden Bezugsebene (E) eine durch die Hochrichtung (11) vorgegebene Hochachse (24) aufweist, und dass das obere permanent offene Kaltluftansaugfenster (23) auf der Hochachse (24) liegt und insbesondere symmetrisch dazu ausgebildet ist.

3. Arbeitsgerät nach Anspruch 1 oder 2,
**dadurch gekennzeichnet, dass** die Luftfilteranordnung (15) in einer senkrecht zur Filterachse (18) liegenden Bezugsebene (E) eine durch die Hochrichtung (11) vorgegebene Hochachse (24) aufweist, und dass das Filtergehäuse (16) auf den beiden sich gegenüberliegenden Seiten der Hochachse (24) je ein seitliches Ansaugluftfenster (21, 22) aufweist.

4. Arbeitsgerät nach einem der Ansprüche 1 bis 3,
**dadurch gekennzeichnet, dass** die Luftfilteranordnung (15) in einer senkrecht zur Filterachse (18) liegenden Bezugsebene (E) eine senkrecht zur Hochachse (24) liegende Querachse (25) aufweist, und dass das mindestens eine Ansaugluftfenster (21, 22) unterhalb der Querachse (25) liegt.

5. Arbeitsgerät nach einem der Ansprüche 1 bis 4,
**dadurch gekennzeichnet, dass** sich das obere permanent offene Kaltluftansaugfenster (23) in einer senkrecht zur Filterachse (18) liegenden Bezugsebene (E) über einen ersten Umfangswinkel (ß) erstreckt, wobei der erste Umfangswinkel (β) ≤ 90° und bevorzugt ≤ 70° ist, und insbesondere zumindest näherungsweise 50° beträgt.

6. Arbeitsgerät nach einem der Ansprüche 1 bis 5,
**dadurch gekennzeichnet, dass** das Filtergehäuse (16) eine Umfangswand (26) aufweist, wobei die Umfangswand (26) zwischen dem oberen permanent offenen Kaltluftansaugfenster (23) und dem benachbarten Ansaugluftfenster (21, 22) einen seitlichen strömungsdichten Wandabschnitt (27, 28) aufweist, der sich in der Bezugsebene (E) über einen zweiten Umfangswinkel (γ) erstreckt, wobei der zweite Umfangswinkel (γ) > 60° und insbesondere > 80° ist.

7. Arbeitsgerät nach einem der Ansprüche 1 bis 6,
**dadurch gekennzeichnet, dass** das obere permanent offene Kaltluftansaugfenster (23) bezogen auf seine Erstreckung in der Umfangsrichtung einen Mittelpunkt (44) aufweist, wobei der Mittelpunkt (44) des oberen permanent offenen Kaltluftansaugfensters (23) in der Bezugsebene (E) in einem dritten Umfangswinkel (δ) relativ zur angrenzenden Kante des benachbarten Ansaugluftfensters (22) positioniert ist, und wobei der dritte Umfangswinkel (δ) in einem Bereich von einschließlich 100° bis einschließlich 130° liegt und insbesondere zumindest näherungsweise 120° beträgt.

8. Arbeitsgerät nach einem der Ansprüche 1 bis 7,
**dadurch gekennzeichnet, dass** der Neigungswinkel (α) der Filterachse (18) > 30° und insbesondere > 45° ist.

9. Arbeitsgerät nach einem der Ansprüche 1 bis 8,
**dadurch gekennzeichnet, dass** das Filtergehäuse (16) eine Umfangswand (26) aufweist, und dass das obere permanent offene Kaltluftansaugfenster (23) in der Umfangswand (26) ausgebildet ist.

10. Arbeitsgerät nach einem der Ansprüche 1 bis 9,
**dadurch gekennzeichnet, dass** die Luftfilteranordnung (15) ein Bodenbauteil (29) aufweist, welches einen Filterboden (30) des Filtergehäuses (16) bildet und außerdem zumindest abschnittsweise über die Kontur des Filtergehäuses (16) derart hinausgezogen ist, dass es ein Wandteil (31) eines in das Filtergehäuse (16) führenden Frischluftkanals (32) bildet.

11. Arbeitsgerät nach einem der Ansprüche 1 bis 10,
**dadurch gekennzeichnet, dass** der Verbrennungsmotor (10) eine Kühlluftführung mit einer Abtrennung (33) gegenüber der Ansaugluftführung der Luftfilteranordnung (15) aufweist.

12. Arbeitsgerät nach einem der Ansprüche 1 bis 11,
**dadurch gekennzeichnet, dass** der Verbrennungsmotor (10) ein Einspritzmotor ohne Ansaugluftvorwärmung ist.

## Claims

1. Hand-held work apparatus having an internal combustion engine (10) for driving a tool of the work apparatus (1), and having an air filter assembly (15) for filtering the intake air of the internal combustion engine (10), wherein the work apparatus (1) has a vertical direction (11), wherein the air filter assembly (15) comprises an air filter (17) and a filter housing (16) that surrounds the air filter (17), wherein the air filter (17) extends along a filter axis (18) and has a filter element (19) which is disposed so as to encircle the filter axis (18) and, in terms of the filter axis (18), is radially passed through by a flow, wherein the filter axis (18) is at an inclination angle (α) in relation to the vertical direction (11), and the filter element (19) in terms of the vertical direction (11) has an upper filter portion (20), and wherein the filter housing (16) outside the upper filter portion (20) has at least one intake air window (21, 22),
**characterized in that** the filter housing (16), in addition to the at least one intake air window (21, 22), in the region of the upper filter portion (20) also has an upper, permanently open, cold intake air window (23).

2. Work apparatus according to claim 1,
**characterized in that** the filter assembly (15), in a reference plane (E) that is perpendicular to the filter axis (18), has a vertical axis (24) which is predefined by the vertical direction (11), and **in that** the upper, permanently open, cold intake air window (23) lies on the vertical axis (24) and is in particular configured so as to be symmetrical in relation to the latter.

3. Work apparatus according to claim 1 or 2,
**characterized in that** the air filter assembly (15), in a reference plane (E) that is perpendicular to the filter axis (18), has a vertical axis (24) which is predefined by the vertical direction (11), and **in that** the filter housing (16) on the two mutually opposite sides of the vertical axis (24) has in each case one lateral intake air window (21, 22).

4. Work apparatus according to one of claims 1 to 3,
**characterized in that** the air filter assembly (15), in a reference plane (E) that is perpendicular to the filter axis (18), has a transverse axis (25) which is perpendicular to the vertical axis (24), and **in that** the at least one intake air window (21, 22) lies below the transverse axis (25).

5. Work apparatus according to one of claims 1 to 4,
**characterized in that** the upper, permanently open, cold intake air window (23), in a reference plane (E) that is perpendicular to the filter axis (18), extends across a first circumferential angle (β), wherein the first circumferential angle (β) is ≤ 90° and preferably ≤ 70°, and is in particular at least approximately 50°.

6. Work apparatus according to one of claims 1 to 5,
**characterized in that** the filter housing (16) has a circumferential wall (26), wherein the circumferential wall (26) between the upper, permanently open, cold air intake window (23) and the neighbouring intake air window (21, 22) has a lateral, flowtight, wall portion (27, 28) which in the reference plane (E) extends across a second circumferential angle (γ), wherein the second circumferential angle (γ) is > 60° and in particular > 80°.

7. Work apparatus according to one of claims 1 to 6,
**characterized in that** the upper, permanently open, cold air intake window (23), in terms of the extent thereof in the circumferential direction, has a centre (44), wherein the centre (44) of the upper, permanently open, cold air intake window (23) in the reference plane (E) is positioned at a third circumferential angle (δ) relative to the adjacent edge of the neighbouring intake air window (22), and wherein the third circumferential angle (δ) is in a range from 100° inclusive to 130° inclusive, and is in particular at least approximately 120°.

8. Work apparatus according to one of claims 1 to 7,
**characterized in that** the inclination angle (α) of the filter axis (18) is > 30° and in particular > 45°.

9. Work apparatus according to one of claims 1 to 8,
**characterized in that** the filter housing (16) has a circumferential wall (26), and **in that** the upper, permanently open, cold air intake window (23) is configured in the circumferential wall (26).

10. Work apparatus according to one of claims 1 to 9,
**characterized in that** the air filter assembly (15) has a base component (29) which forms a filter base (30) of the filter housing (16) and moreover at least in portions extends beyond the contour of the filter housing (16) in such a manner that said base component (29) forms a wall part (31) of a fresh air duct (32) that leads into the filter housing (16).

11. Work apparatus according to one of claims 1 to 10,
**characterized in that** the internal combustion engine (10) has a cooling air route with a separation (33) in relation to the intake air route of the air filter assembly (15).

12. Work apparatus according to one of claims 1 to 11,
**characterized in that** the internal combustion engine (10) is a fuel-injected engine without intake air preheating.

## Revendications

1. Appareil de travail portatif comportant un moteur à combustion interne (10) servant à l'entraînement d'un outil de l'appareil de travail (1) et comportant un ensemble filtre à air (15) servant à la filtration de l'air d'admission du moteur à combustion interne (10), l'appareil de travail (1) présentant une direction verticale (11), l'ensemble filtre à air (15) comportant un filtre à air (17) et un boîtier de filtre (16) entourant le filtre à air (17), le filtre à air (17) s'étendant le long d'un axe de filtre (18) et comprenant un élément de filtre (19) à travers lequel l'écoulement s'écoule radialement par rapport à l'axe de filtre (18) et disposé de manière périphérique autour de l'axe de filtre (18), l'axe de filtre (18) étant situé suivant un angle d'inclinaison (α) par rapport à la direction verticale (11) et l'élément de filtre (19) comprenant une partie supérieure de filtre (20) par rapport à la direction verticale (11), et le boîtier de filtre (16) comprenant, à l'écart de la partie supérieure de filtre (20), au moins une fenêtre d'air d'admission (21, 22), **caractérisé en ce que** le boîtier de filtre (16) comprend en plus de l'au moins une fenêtre d'air d'admission (21, 22) une fenêtre d'admission d'air froid (23) supérieure ouverte de manière permanente dans la région de la partie supérieure de filtre (20).

2. Appareil de travail selon la revendication 1,
**caractérisé en ce que** l'ensemble filtre à air (15) comprend, dans un plan de référence (E) situé perpendiculairement à l'axe de filtre (18), un axe vertical (24) prédéfini par la direction verticale (11), et **en ce que** la fenêtre d'admission d'air froid (23) supérieure ouverte de manière permanente est située sur l'axe vertical (24) et est réalisée en particulier de manière symétrique par rapport à celui-ci.

3. Appareil de travail selon la revendication 1 ou 2,
**caractérisé en ce que** l'ensemble filtre à air (15) comprend, dans un plan de référence (E) situé perpendiculairement à l'axe de filtre (18), un axe vertical (24) prédéfini par la direction verticale (11), et **en ce que** le boîtier de filtre (16) comprend sur les deux côtés opposés de l'axe vertical (24) respectivement une fenêtre d'air d'admission (21, 22) latérale.

4. Appareil de travail selon l'une des revendications 1 à 3,
**caractérisé en ce que** l'ensemble filtre à air (15) comprend, dans un plan de référence (E) situé perpendiculairement à l'axe de filtre (18), un axe transversal (25) situé perpendiculairement à l'axe vertical (24), et **en ce que** l'au moins une fenêtre d'air d'admission (21, 22) est située en dessous de l'axe transversal (25).

5. Appareil de travail selon l'une des revendications 1 à 4,
**caractérisé en ce que** la fenêtre d'admission d'air froid (23) supérieure ouverte de manière permanente s'étend sur un premier angle périphérique (β) dans un plan de référence (E) situé perpendiculairement à l'axe de filtre (18), le premier angle périphérique (β) étant ≤ 90° et de préférence ≤ 70°, et valant en particulier au moins approximativement 50°.

6. Appareil de travail selon l'une des revendications 1 à 5,
**caractérisé en ce que** le boîtier de filtre (16) comprend une paroi périphérique (26), la paroi périphérique (26) comprenant une partie de paroi (27, 28) latérale étanche aux écoulements entre la fenêtre d'admission d'air froid (23) supérieure ouverte de manière permanente et la fenêtre d'air d'admission (21, 22) voisine, laquelle partie de paroi s'étend dans le plan de référence (E) sur un deuxième angle périphérique (γ), le deuxième angle périphérique (γ) étant > 60° et en particulier > 80°.

7. Appareil de travail selon l'une des revendications 1 à 6,
**caractérisé en ce que** la fenêtre d'admission d'air froid (23) supérieure ouverte de manière permanente comprend un centre (44) par rapport à son étendue dans la direction périphérique, le centre (44) de la fenêtre d'admission d'air froid (23) supérieure ouverte de manière permanente étant positionné dans le plan de référence (E) suivant un troisième angle périphérique (δ) par rapport au bord adjacent de la fenêtre d'air d'admission (22) voisine, et le troisième angle périphérique (δ) étant compris dans une plage de 100° inclus à 130° inclus et valant en particulier au moins approximativement 120°.

8. Appareil de travail selon l'une des revendications 1 à 7,
**caractérisé en ce que** l'angle d'inclinaison (α) de l'axe de filtre (18) est > 30° et en particulier > 45°.

9. Appareil de travail selon l'une des revendications 1 à 8,
**caractérisé en ce que** le boîtier de filtre (16) comprend une paroi périphérique (26), et **en ce que** la fenêtre d'admission d'air froid (23) supérieure ouverte de manière permanente est réalisée dans la paroi périphérique (26).

10. Appareil de travail selon l'une des revendications 1 à 9,
**caractérisé en ce que** l'ensemble filtre à air (15) comprend un composant de base (29), lequel forme une base de filtre (30) du boîtier de filtre (16) et s'étend en outre au moins dans certaines parties au-delà du contour du boîtier de filtre (16), de telle sorte qu'il forme une partie de paroi (31) d'un canal d'air frais (32) menant dans le boîtier de filtre (16).

11. Appareil de travail selon l'une des revendications 1 à 10,
**caractérisé en ce que** le moteur à combustion interne (10) comprend un guide d'air de refroidissement doté d'une séparation (33) par rapport au guide d'air d'admission de l'ensemble filtre à air (15).

12. Appareil de travail selon l'une des revendications 1 à 11, **caractérisé en ce que** le moteur à combustion interne (10) est un moteur à injection sans préchauffage de l'air d'admission.
